Europäisches Patentamt

European Patent Office

Office européen des brevets

(11) Veröffentlichungsnummer: **0 383 990**
**A1**

## EUROPÄISCHE PATENTANMELDUNG

(21) Anmeldenummer: 89108205.9

(51) Int. Cl.5 **C10G 32/02, F02B 51/04**

(22) Anmeldetag: 06.05.89

(30) Priorität: 07.02.89 DE 3903573

(43) Veröffentlichungstag der Anmeldung:
**29.08.90 Patentblatt 90/35**

(84) Benannte Vertragsstaaten:
**AT BE CH DE ES FR GB GR IT LI LU NL SE**

(71) Anmelder: **Pertler, Alois**
**Auf der Windschnur 4**
**D-8360 Deggendorf(DE)**

(72) Erfinder: **Pertler, Alois**
**Auf der Windschnur 4**
**D-8360 Deggendorf(DE)**

(74) Vertreter: **Munderich, Paul, Dipl.-Ing.**
**Frankfurter Strasse 84**
**D-6466 Gründau-Rothenbergen(DE)**

(54) **Verfahren zur Magnetisierung flüssiger bis gasförmiger Kohlenwasserstoffe sowie eine Vorrichtung zur Durchführung des Verfahrens.**

(57) Die Erfindung betrifft ein Verfahren zur Magnetisierung flüssiger- bis gasförmiger Kohlenwasserstoffe durch mindestens zwei hintereinander angeordnete Paarungen von vorzugsweise Ringmagneten erfolgten Magnetfelder, wobei deren Polung zueinander Süd/Nor - Nord/Süd oder auch umgekehrt ist. Die Anfangs- und Endpaarungen weisen jeweils die gleiche Richtung aus. Der Träger dieser Magnete ist eine durchgehende Rohrleitung (2), durch die die Kohlenwasserstoffe durchgeführt werden. Durch die Differenz zwischen den Geschwindigkeiten der Elektronenkäfige und denen der wesentlich langsamer drehenden Kerne werden die Kohlenwasserstoffe so verwirbelt, daß sie einen dispersen Schwebezustand annehmen und der Durchflußwiderstand verringert wird.

Fig.3

EP 0 383 990 A1

### Verfahren zur Magnetisierung flüssiger bis gasförmiger Kohlenwasserstoffe sowie eine Vorrichtung zur Durchführung des Verfarhrens

Die Erfindung betrifft ein Verfahren zur Magnetisierung flüssiger bis gasförmiger Kohlenwasserstoffe durch mindestens zwei hintereinander angeordnete Paarungen von üblicherweise Ring- oder Stabmagneten erzeugten Magnetfelder, wobei deren Polung zueinander Nord-Süd/Süd-Nord oder Süd-Nord/Nord-Süd, jeweils der Anfangs- und Endpaarung, die gleiche Richtung aufweisen, insbesondere zur Durchleitung von Kohlenwasserstoffen, die im wesentlichen für die Brennstoff- und Schmierstoffverwendung vorgesehen sind, sowie eine Vorrichtung zur Ausübung dieses Verfahrens.

Es ist bekannt, gasförmige und flüssige Medien hinsichtlich ihres Fließverhaltens durch die Einwirkung von mehr oder weniger starken Magnetfeldern in Abhängigkeit von deren zueinander gerichteten Polung physikalisch zu beeinflussen.

Ein durch ein magnetisches Feld gekennzeichneter Magnet ist in seinem Inneren durch eine sich einstellende Vorzugsrichtung der Elementarmagnete "magnetisiert", wobei ein quantitatives Maß hierfür das magnetische Moment der Volumeneinheit ist, das man bei homogenem magnetisiertem Material durch die Division des Momentes durch das Volumen erhält.

Der Begriff der Magnetisierung (M) wird nicht nur für ferromagnetische Körper verwendet, sondern das magnetische Verhalten der Körper wird allgemein zwischen der äußeren Feldstärke (H) und der durch sie hervorgerufenen Magnetisierung bestimmt.

Bei nichtferromagnetischen Körpern ist das Maß der Magnetisierung (M) proportional zur Feldstärke (H), so lange man nicht extrem hohe Feldstärken und extrem hohe Temperaturen ansetzen muß.

In diese Betrachtung ist die Magnetohydrodynamik mit einzuschließen, die sich mit den Wechselwirkungen zwischen Magnetfeldern und strömenden elektrischen leitfähigen Flüssigkeiten und Gasen, insbesondere Plasmen, beschäftigt.

In hydrodynamischen Generatoren benutzt man thermisch ionisierte Luft oder auch Verbrennungsgase.

Das Gebiet ist sehr komplex, man kann die Niedertemperatur- Plasmachemie zumindest als nicht allzufern liegende Hypothese heranziehen.

Diese Sachlage gibt Anlaß zu folgenden Überlegungen:

Da die Brennstoffe,in diesem Fall Gase und Flüssigkeiten der Kohlenwasserstoffgruppe, auch nach der Nachreinigung nicht in engerem Sinn die verbleibenden Reststoffe als Verunreinigungen angesprochen werden können sondern ihr Vorhandensein bereits stofflich bedingt ist und unabhängig weitere, durch Bau- und Konstruktionsmaßnahmen hervorgerufene kolloidale Verunreinigungen oder dgl. Substanzen tragen können,

ist bei Verbrennungsprozessen, in denen das Verhalten der Schmierstoffe mit einbezogen werden kann, nicht annähernd mit einem idealen Ablauf der Verbrennung zu rechnen.

Dies gilt insbesondere für die Verbrennung in Diesel- oder Ottomotoren. Die mangelhafte Reinheit der Brennstoffe ist letztlich immer die Hauptursache der Anwendungsnotwendigkeit der aufwendig gewordenen und trotzdem nicht befriedigenden Umwelttechniken.

Dies berücksichtigend, ist es Aufgabe dieser Erfindung, ein Verfahren zur Magnetisierung flüssiger bis gasförmiger Kohlenwasserstoffe zu nennen, das eine negative Beeinflussung des Brennprozesses durch unlösliche Rückstände oder sonstige Verunreinigungen während des Ablaufes des Brennprozesses neutralisiert. Insbesondere sollen bereits die mit der Brennstoffzuführung sich einstellenden Anbackungen an den Wandungen und in den Düsen vermieden werden, so daß auch das Problem der Grenzschichtbildung in diesen Leitungen minimiert wird. Darüberhinaus soll eine zur Ausübung des Verfahrens erforderliche Vorrichtung genannt werden.

Das erfindungsgemäße Verfahren sieht vor, daß die vorhandenen, nicht löslichen Substanzen hoher Viskosität, wie Peche, Bitumina, durch richtungsgelenkte Drehung ihrer Atome und ihrer jeden Kern umgebenden Elektronenkäfige durch die Differenz zwischen den Drehgeschwindigkeiten der Elektronenkäfige und den der wesentlich langsamer drehenden Kerne und die dadurch entstehende Verwirbelung innerhalb der Kohlenwasserstoffe in einen über die Ausdehnung der Magnetfelder nicht absetzbaren Schwebezustand versetzt werden, der kontinuierlich bis zum Abbau der Magnetisierung der Kohlenwasserstoffe, schwerkraftbedingt unterstützt, bis gegen Null abfällt.

Mit anderen Worten wird damit ausgesagt, daß dadurch die Differenzgeschwindigkeit zwischen den Elektronen und dem jeweils durch sie eingeschlossenen Atomkern störenden Verunreinigungen in so hohem Maße dispergiert werden, daß weder viskositätsbedingte Anbackungen an den Wandungen noch bleibende Grenzschichten sich aufbauen können.

Dies bedeutet, daß der Strömungwiderstand ganz wesentlich reduziert, bzw. die Durchsatzleistung bei sonst gleichen Bedingungen erhöht werden kann. Da der weiteren Beschleunigung der verwirbelten Teilchen Grenzen, auch baulicher Art, gesetzt sein können, ist es zweckmäßig, daß bei längeren Magnetisierungsstrecken die Tendenz zur Beschleunigung der Verwirbelung der schweren Substanzen positiv oder negativ gesteuert wird, wobei ein oder mehrere Magnetfeld(er), unter Einhaltung der vorgesehenen Polung, schwächer oder stärker dimensioniert ist bzw. sind, als ein eventuell weiteres, abweichend hiervon dimensioniertes Magnetfeld.

In diesem Zusammenhang ist zu bemerken, daß durch das Viskositätsverhalten der geführten Kohlenwasserstoffe die Flüssigkeitsstruktur, zumindest partiell, mechanisch beansprucht wird und eine reversible Strukturänderung des Fließwiderstandes thixotropes Verhalten einnehmen kann.

Während der Erprobung wurde eine möglichste Vereinfachung des Magnetisierungseffektes erkannt. Der in der Regel von der Batterie abgehende, durch die Windungen geführte Stromkreis wird zu dem Minuspol geschlossen. Dies zeigt selbstverständlich die eindeutigsten Ergebnisse.

Es genügt jedoch, daß die in einem Brennstoffmagnetisierungsrohr geführten flüssigen oder gasförmigen Kohlenwasserstoffe über die Windungen der Magnete deren Einwirkung unterworfen werden, wobei die Fortführung des Stromes mit Ende der Windungen einmal über die Kohlenwasserstoffe selbst und die sie umfassende Wandung des Rohres der Isolierung der stromführenden Windungen und deren sie zusätzlich umgebende Vergußmasse in Richtung erfolgt, und

daß die reduzierten Leitfähigkeiten und Durchschlagsfestigkeiten der Kohlenwasserstoffe und deren weiter erwähnten Stoffe gestuft so aufeinander abgestimmt sind, daß das elektrische Feld, unter Berücksichtigung dieser Verlustfaktoren, sich ausbilden kann und zum Gehäuse bzw. eventuell andere zur Erdung geeignete Teile über die Minder-Leiter abbaubar sind.

Selbstverständlich erlaubt die Serienherstellung eine eindeutig aufeinander abgestimmte Einstellung der reduzierten Leitfähigkeit, so daß, dies vorausgesetzt, das elektrische Feld sich ausbilden kann und zum Gehäuse hin abbaubar ist, d.h. in der Praxis, daß lediglich die einander gegenüberliegenden Pole N der Spulen mit der Stromquelle verbunden sind.

Zur Durchführung des Verfahrens wird vermerkt, daß der Brennstoff auf üblichem Wege und durch übliche Mittel aus dem Tank vor seinem Eintritt in den Vergaser bzw. in eine Einspritzpumpe durch ein zu- und abflußseitig isoliertes, mit zwei Ring- oder Stabmagneten ausgerüstetes Rohr führbar ist,

dessen gegenüberliegende Pole bei der Polung Süd/Nord und der fortsetzenden Polung Nord/Süd die Plus-Phase bilden, während die verbundenen, außenliegenden Süd-Pole zur Minus-Phase zusammengefaßt werden, und

daß die im Gehäuse getroffenen Anordnungen, d.h. das Rohr sowie die beiden Magneten, die Verteilerplatte, die Anschlußabführung, in die Gießmasse eingebracht sind.

Abschließend ist zu bemerken, daß in Abänderung des Verfahrens lediglich eine Spule verwendet wird.

Die Umweltbelastung an Schadstoffen $CH_x$ und CO kann um 98 % zurückgeführt werden.

Die Verwendung des Verfahrens zeichnet sich dadurch aus, daß dieses für die Aufbereitung von Kohlenwasserstoffen zu Kraftstoff, wie Benzine, Benzole, Dieselöl und Treibgas, für Brennkraftmaschinen und zur Befeuerung von Brennaggregaten (Gas oder Öl), vorgesehen ist.

Das Verfahren und eine zur Anwendung erforderliche Vorrichtung wird anhand der beigefügten Zeichnungen beispielsweise näher erläutert.

Figur 1 zeigt das Magnetisierungsgerät mit zwei elektrischen Anschlüssen.

Figur 2 zeigt das Magnetisierungsgerät mit einem Stromanschluß nach Figur 1.

Figur 3 zeigt die Anordnung eines Gerätes in die Brennstoffzuführung eines Ottomotores (PKW).

Dem Magnetisierungsgerät wird der Kraftstoff aus dem Tank 14 über ein Kraftstoff-Filter 13, über eine Saug-Membranpumpe 12 und im weiteren durch eine isolierende Zuleitung 2.1, z.B. aus Elastomer, mit der aus hochleitendem Rohr 2 bestehenden Magnetisierungsstrecke verbunden und nach dem Durchgang durch diese wieder über eine isolierende Leitung in den Vergaser 10 geführt, von dem die Anschlußleitung 3.2 das Rohr bzw. Schlauchmaterial mit dem Einlaßventilstutzen 11.1 verbunden ist und in den Zylinderkopf 11 einmündet.

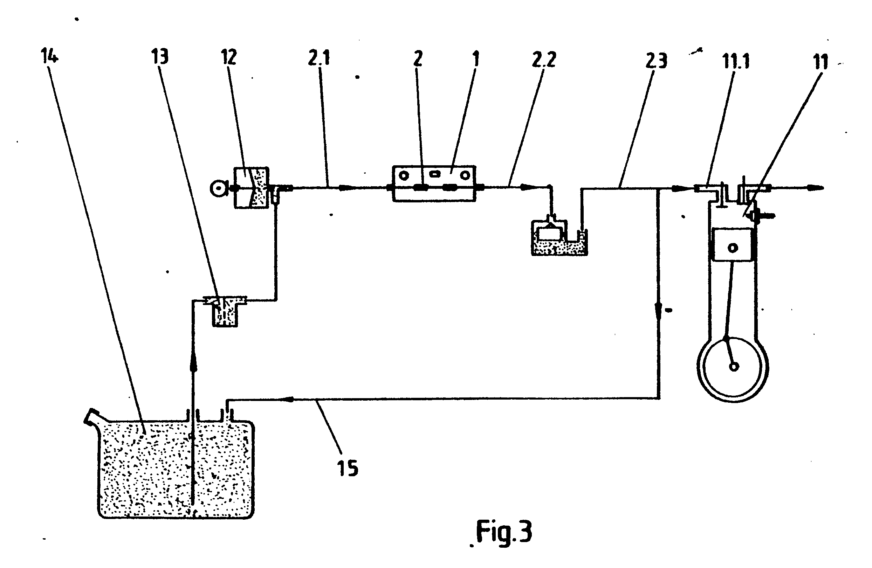

Wie aus Figur 3 zu entnehmen ist, führt eine vor diesem Zylinderkopf abzweigende Bypaßleitung 15 den Kraftstoffüberschuß in den Tank 14 zurück.

Das Kraftstoffmagnetisierungsrohr 2 wird durch zwei im Abstand voneinander angeordnete Elektro-Ringmagnete durch deren Windungen 3 umwickelt, wobei deren Windungsgrad im allgemeinen gleichzahlig gewählt ist.

Diese sind so mit einem elektrischen Verteiler 4 verbunden, daß in Richtung des Durchflusses (Teirichtung) jeweils die gegenüberliegenden Enden der Magnetisierungsstrecke der verbundenen Magnete gleichgepolt sind, während deren, die den Abstand der beiden Magnete begrenzenden Enden eine entgegengesetzte Polung aufweisen, die in den elektrischen Zuleitungen 7 ihre Fortsetzung finden.

Das Magnetisierungsgerät 1 wird durch ein Gehäuse 1.1 umfaßt, in dem außer dem Rohr 2, den Magnetwindungen 3, der Magnetisierungsstrecke, ein elektrischer Verteiler 4 und zwei Kontrolllampen 5 angeordnet sind.

Das Gehäuse 1.1 wird durch eine isolierende Gießmasse von einem Schutzkörper 6 vollständig umhüllt.

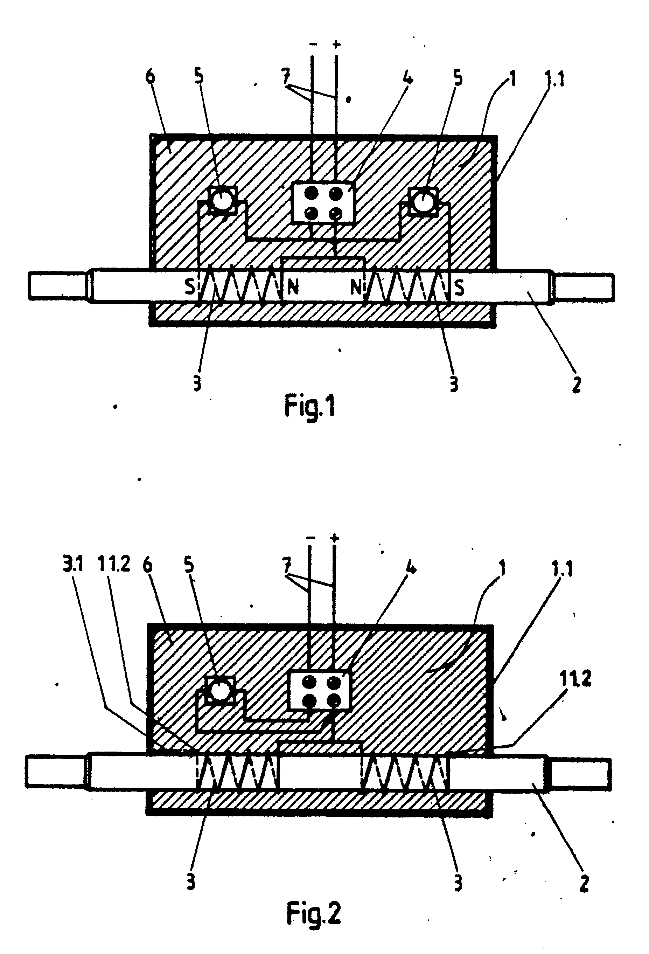

Durch die Figur 2 wird ein Magnetisierungsgerät mit einem sogenannten Einpolanschluß 7, d.h. an dessen Plus-Pol, ausgewiesen.

Er führt über den elektrischen Verteiler 4 in die beiden gegenüberliegenden Enden 11.2 der Windungen 3.

Die zur Masse führende Rückleitung ist durch die Stoffe 3.1 in der Summierung gegeben, wobei das gesamte Gehäuse 1.1 als Massen-Pol zu betrachten ist.

Das Verfahren wurde mit einem Kraftfahrzeug der Marke Mitsubishi-Galant, 2,4 l als Testfahrzeug erprobt.

Es stehen weitere Testergebnisse zur Verfügung, wobei diese durch ein Gutachten des TÜV bestätigt werden sollen.

Das Ergebnis der nachfolgenden Messungen zeigt die Wirkung der erzeugten Magnetfelderbei Brennkraftmaschinen und Ölbefeuerung.

4

**Testfahrt mit einem Mitusbishi-Galant, Baujahr 1/88 - 2,4 l (Normal - Bleifrei )**

Tag : 16.01.1989        Uhrzeit : 14.30 h     Teststrecke:  Mainfal - Frankfurt/M

EP 0 383 990 A1

| | | Geschwindigkeit : | 90 km/h | 120 km/h | 130 km/h | 150 km/h | Vollgas 180 km/h |
|---|---|---|---|---|---|---|---|
| ohne Magnetisierung | (1) | | | | | | |
| | | | 10,2 | 10,4 | | 11,3 | 18,6 |
| mit Magnetisierung | (1) | | | | | | |
| I | 1 SP/20 Wi S - N | | 8,8 | 8,3 | | 10,2 | 16,0 |

II  1 SP/20 Wi   Teststrecke: A 66 - Gelnhausen - Langenselbold
    S - N                   (Motor sehr elastisch)
          Geschwindigkeit:  180-190-198-190-180        14,6 l

    1 SP/20 Wi        Teststrecke : Lieblos-  Bad Orb ( A66)
    S - N
III            Geschwindigkeit :   190 km/h        14,8 l

**Testfahrt mit einem Mitusbishi-Galant, Baujahr 1/88 - 2,4 l   (Normal - Bleifrei )**

Tag : 17.01.1989          Uhrzeit : 7.10 h   Teststrecke: Gelnhausen-Würzburg ( A 66 u. A 3

| | Geschwindigkeit : 90 km/h | 120 km/h | 130 km/h | 150 km/h | Vollgas 180 km/h |
|---|---|---|---|---|---|
| ohne Magnetisierung | | | | | |
| mit Magnetisierung (1) 2 SP/20 Wi S/N - S/N I | 7,4 | 8,7 | | 9,1 | 20,6 |
| | (180/190 / 2 km = 0,413 l) | | | | |
| II 2 SP/20 Wi S/N - N/S | 7,2 | 8,0 | | 11,2 | 16,5 |
| | (180-190-185 / 4 km = 0,659 l) | | | | |
| 2 SP/20 Wi S/N - N/S III | 6,5 | 6,9 | | 9,4 | 14,6 |
| | sehr ppurtfreudig | | | | |

EP 0 383 990 A1

**Testfahrt mit einem Mitusbishi-Galant, Baujahr 1/88 – 2,4 l   (Normal – Bleifrei )**

Tag : 18.01.1989          Uhrzeit : 12.10 h   Teststrecke:   Frankfurt – Würzburg  I
                                                             Regensburg – Deggendorf (II)

(donau-abwärts)

| | Geschwindigkeit : | 90 km/h | 120 km/h | 130 km/h | 150 km/h | Vollgas 180 km/h |
|---|---|---|---|---|---|---|
| **ohne Magnetisierung (1)** | | | | | | |
| Regensburg-Deggendorf | | 7,8 | 10,8 | 11,2 | 12,8 | 17,4 |
| **mit Magnetisierung (1)** | | | | | | |
| I  2 SP/20 Wi  S/N – N/S | | 7,5 | 8,7 | 9,8 | 12 | 16 |
| II 2 SP/20 Wi  S/N – N/S | | 7,5 | 8,4 | 9,5 | 11,2 | 15,5 |

III

EP 0 383 990 A1

| Einsparung in Vol. % | | | | | | | |
|---|---|---|---|---|---|---|---|
| Geschwindigkeit : | | | 90 km/h | 120 km/h | 130 km/h | 150 km/h | 180 km/h Vollgas |
| 1.1) | ohne Magnetisierung (1) | | 10,2 | 10,4 | 10,7 | 11,3 | 18,6 |
| | mit Magnetisierung (1) 1 SP 20 Wi S - N | | 8,8 | 9,3 | 9,6 | 10,2 | 16,4 |
| | Vol. % Einsparung | | 13,7 | 10,6 | 10,3 | 8,9 | 11,8 |
| 1.2) | ohne Magnetisierung (1) | | 10,2 | 10,4 | 10,7 | 11,3 | 18,6 |
| | mit Magnetisierung (1) 2 SP 20 Wi N/S - S/N | | 7,4 | 8,7 | 8,9 | 9,1 | 17,3 |
| | Vol. % Einsparung | | 27 | 16,3 | 16,8 | 19,4 | 6,9 |
| 1.3) | ohne Magnetisierung (1) | | 10,2 | 10,4 | 10,7 | 11,3 | 18,6 |
| | mit Magnetisierung (1) 2 SP 20 Wi S/N - N/S | | 7,2 | 8,0 | 8,4 | 9,1 | 16,6 |
| | Vol. % Einsparung | | 29,4 | 23,0 | 21,5 | 19,4 | 10,7 |
| In 1.3) sehr ruhiger, spurtfreudiger und elastischer Motorlauf | | | | | | | |

| Ölfeuerung | | | | |
|---|---|---|---|---|
| Buderus Heizkessel "LOGAN" 06/NH548, Baujahr 1977 | | | | |
| 44000 Kcal/h = 51000 KW | | | | |
| Brenner "WEISSHAUPT", Typ WL 22 - Öldrücke 1,8 bis 8 bar, Öldurchsatz 1,8 bis 4 WZ/A Baujahr 1977 | | | | |
| Pumpendruck 10 bar | | | | |
| **ERGEBNIS** | | | | |
| 26.01.1989/ 11 Uhr | Düsendurchsatz | Rußbild | $CO_2$ | Abgastemperatur in °C |
| Düse ohne Magnetisierung | 5 l | 0-1 | 9 | 200 |
| Düse 0,85 mit Magnetisierung (US-GAL.) | 3.5 l | 0-1 | 11 | 190 |
| ERSPARNIS 30 % | 1,5 l | | | |
| Eingestellt und gemessen von einem Heizungsfachmann und Berater (Adresse auf Wunsch nachweisbar) | | | | |

9

**Ansprüche**

1. Verfahren zur Magnetisierung flüssiger bis gasförmiger Kohlenwasserstoffe durch mindestens zwei hintereinander angeordnete Paarungen von üblicherweise durch Ring- oder Stabmagnete erzeugte Magnetfelder, wobei deren Polung zueinander Nord-Süd / Süd-Nord oder Süd-Nord / Nord - Süd, jeweils der Anfangs- und Endpaarung, die gleiche Richtung aufweisen, insbesondere zur Durchleitung von Kohlenwasserstoffen, die im wesentlichen für die Brennstoff- und Schmierstoffverwendung vorgesehen sind, dadurch gekennzeichnet,

daß die vorhandenen, nicht löslichen Substanzen hoher Viskosität, wie Peche, Bitumina, durch richtungsgelenkte Drehung ihrer Atome und ihrer jeden Kern umgebenden Elektronenkäfige durch die Differenz zwischen den Drehgeschwindg keiten der Elektronenkäfige und den der wesentlich langsamer drehenden Kerne und die dadurch entstehende Verwirbelung innerhalb der Kohlenwasserstoffe in einen über die Ausdehnung der Magnetfelder nicht absetzbaren Schwebezustand versetzt werden, der kontinuierlich bis zum Abbau der Magnetisierung der Kohlenwasserstoffe, schwerkraftbedingt unterstützt, bis gegen Null abfällt.

2. Verfahren zur Magnetisierung flüssiger bis gasförmiger Kohlenwasserstoffe nach Anspruch 1, dadurch gekennzeichnet,

daß die Tendenz zur Beschleunigung der Verwirbelung der schweren Substanzen positiv oder negativ gesteuert wird, wobei ein oder mehrere Magnetfeld(er), unter Einhaltung der vorgesehenen Polung, schwächer oder stärker dimensioniert ist bzw. sind, als ein eventuell weiteres, abweichend hiervon dimensioniertes Magnetfeld.

3. Verfahren zur Magnetisierung flüssiger bis gasförmiger Kohlenwasserstoffe nach Anspruch 1 und 2, dadurch gekennzeichnet,

daß durch das Viskositätsverhalten der geführten Kohlenwasserstoffe die Flüssigkeitsstruktur, zumindest partiell, mechanisch beansprucht wird und eine reversible Strukturänderung des Fließwiderstandes thixotropes Verhalten einnehmen kann.

4. Verfahren zur Magnetisierung flüssiger bis gasförmiger Kohlenwasserstoffe nach Anspruch 1 bis 3, dadurch gekennzeichnet,

daß die in einem Brennstoffmagnetisierungsrohr (2) geführten flüssigen oder gasförmigen Kohlenwasserstoffe über die Windungen (3) der Magnete deren Einwirkung unterworfen werden, wobei die Fortführung des Stromes mit Ende der Windungen (3) einmal über die Kohlenwasserstoffe selbst und die sie umfassende Wandung des Rohres (2) der Isolierung der stromführenden Windungen (3) und deren sie zusätzlich umgebende Vergußmasse (6) in Richtung (3.1) erfolgt, und

daß die reduzierten Leitfähigkeiten und Durchschlagsfestigkeiten der Kohlenwasserstoffe und deren weiter erwähnten Stoffe gestuft so aufeinander abgestimmt sind, daß das elektrische Feld, unter Berücksichtigung dieser Verlustfaktoren, sich ausbilden kann und zum Gehäuse (1.1) bzw. eventuell andere zur Erdung geeignete Teile über die Minder-Leiter (3.1) abbaubar sind.

5. Vorrichtung zur Durchführung des Verfahrens nach den Ansprüchen 1 bis 3, dadurch gekennzeichnet,

daß der Brennstoff auf üblichem Wege und durch übliche Mittel aus dem Tank (11) vor seinem Eintritt in den Vergaser (10) bzw. in eine Einspritzpumpe durch ein zu- und abflußseitig isoliertes, mit zwei Ring- oder Stabmagneten ausgerüstetes Rohr (2) führbar ist,

dessen gegenüberliegende Pole bei der Polung Süd/Nord und der fortsetzenden Polung Nord/Süd die Plus-Phase bilden, während die verbundenen, außenliegenden Süd-Pole zur Minus-Phase zusammengefaßt werden, und

daß die im Gehäuse (1.1) getroffenen Anordnungen, d.h. das Rohr (2) sowie die beiden Magneten (3), die Verteilerplatte (4), die Anschlußabführung (7), in die Gießmasse (6) eingebracht ist.

6. Vorrichtung nach Anspruch 1 und 4, dadurch gekennzeichnet,

daß lediglich die einander gegenüberliegenden Pole (N) der Spulen (3) mit der Stromquelle verbunden sind.

7. Abänderung des Verfahrens nach Anspruch 1, dadurch gekennzeichnet,

daß lediglich eine Spule verwendet wird.

8. Verwendung des Verfahrens nach den Ansprüchen 1 bis 6, dadurch gekennzeichnet,

daß dieses für die magnetische Aufbereitung von Kohlenwasserstoffen zu Kraftstoff, wie Benzine, Benzole, Dieselöl und Treibgasen, für Brennkraftmaschinen und zur Befeuerung von Brennaggregaten, wie Gas oder

Öl, vorgesehen ist.

Fig.1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 201 140 (ROBINSON)<br>* Ansprüche 15-19 *<br>--- | 1-8 | C 10 G 32/02<br>F 02 B 51/04 |
| A | FR-A-2 540 559 (JOHOKU KIGYO K.K.)<br>* Figure; Ansprüche *<br>--- | 1-8 | |
| A | DE-C-2 857 320 (TAKABAYASHI TOSHIAKI)<br>* Anspruch *<br>----- | 1-8 | |

RECHERCHIERTE
SACHGEBIETE (Int. Cl.5)

C 10 G
F 25 B

Der vorliegende Recherchenbericht wurde für alle Patentansprüche erstellt

| Recherchenort | Abschlußdatum der Recherche | Prüfer |
|---|---|---|
| DEN HAAG | 14-05-1990 | MICHIELS P. |